# EUROPEAN PATENT SPECIFICATION

(11) **EP 2 563 736 B1**
(45) Date of publication and mention of the grant of the patent: **24.01.2018**
(21) Application number: 11729897.6
(22) Date of filing: 28.04.2011
(51) Int. Cl.: C04B 24/10, C04B 28/02, C04B 40/00

(54) **SET RETARDING AND PLASTICIZING ADDITIVE FOR CONCRETE**
ABBINDEVERZÖGERER UND PLASTIFIZIERUNGSZUSATZ FÜR BETON
ADDITIF RETARDATEUR DE PRISE ET PLASTIFIANT POUR BÉTON

(30) Priority: 30.04.2010 EP 10004582
(43) Date of publication of application: 06.03.2013
(73) Proprietor: BENEO-Orafti S.A., 4360 Oreye (BE); Südzucker AG Mannheim/Ochsenfurt, 68165 Mannheim (DE)
(72) Inventor: BOOTEN, Karl, B-3450 Geetbets (BE); HAJI BEGLI, Alireza, 67305 Ramsen (DE); MANN, Karl-Jürgen, A-1150 Wien (AT)
(74) Representative: Koster, Nico
(86) International application number: PCT/EP2011/002133
(87) International publication number: WO 2011/134659

(56) References cited:
- AT-B- 401 647
- US-A1- 2001 029 872

## Description

The invention relates to modifiers for concrete.

Modifiers for concrete such as set retarders are as such known. Examples of known set retarders include sucrose and sodium gluconate.

Nevertheless, there remains a need for providing alternative modifiers such as set retarders; it is the objective of the present invention to provide such alternatives.

The objective is met in that isomaltulose and/or trehalulose are used as set retarder and/or as plasticizer in concrete, the isomaltulose and/or trehalulose not having been modified chemically, e.g. via oxidation or hydrogenation.

It is an advantage of the present invention that a set retarding effect can be obtained in a cost-effective way.

It is a further advantage of the present invention that a favourable combination of set retardation with plasticizing of the concrete can be achieved.

AT-B-401 647 relates to setting regulators for hydraulic binders; these are prepared by a process for the oxidation of carbohydrates or carbohydrate derivatives in which these are catalytically oxidized using oxygen or oxygen-containing gases and a stream of the products formed in this way is subjected to electrodialysis to remove the carboxylic acids formed. The properties of these setting regulators can be matched to the setting retardation and fluidization required for a particular application by selection of the starting compounds and the reaction conditions. One type of carbohydrates that may be used as starting material for the oxidation process is a tri-saccharide such as trihalulose.

The invention relates to concrete. As is known, concrete typically contains: cement; water; optionally agglomerates such as sand, gravel or crushed stone; optionally reinforcements, and optionally one or more modifiers.

Some important classes of modifiers include: accelerators, so as to speed up the setting, also referred to as hardening, of the concrete; set retarders, so as to slow down the setting of the concrete; plasticizers, influencing the viscosity of the freshly made concrete prior to hardening; and further modifiers such as pigments and corrosion inhibitors.

As indicated, one class of concrete modifiers is that of set retarders. A set retarder may be used in case it is desirable to delay the hardening of concrete, for example during transport or if the pouring of a batch of concrete takes a long time, e.g. if a big structural element should be made without interruption. The process of hardening of concrete is, as is known, a complex process involving the reaction between cement and water whereby not only hardening but also a bonding effect is achieved. The function of a set retarder is not to avoid these effects, but rather to delay them. The effect of a set retarder is usually expressed in the time it takes until the onset of concrete setting. Depending on the specific circumstances of the preparation, transport and end use of the concrete, it may be desirable to have a somewhat shorter, or rather a somewhat longer retardation of the setting of concrete. In case a somewhat shorter retardation of the setting of concrete is desired, sodium gluconate is often selected. A somewhat longer retardation of the setting of concrete can be achieved by using sucrose.

In practice, the retardation effect of sucrose, also at low concentrations, is often perceived to be too long; this has even led to damages of concrete elements, and in some countries to the prohibition of the use of sucrose for certain concrete applications. It was now found, surprisingly, that the sucrose isomers isomaltulose, trehalulose and mixtures containing both isomaltulose and trehalulose have a significant different effect in set retardation as compared to sucrose. In particular, the set retarding effect of isomaltulose, trehalulose and mixtures containing both isomaltulose and trehalulose is smaller than that of sucrose.

It was furthermore surprisingly found that a plasticizing effect is achieved by the modifiers according to the invention, and moreover that the plasticizing effect is stronger than that of sucrose, even though isomaltulose and trehalulose are isomers of sucrose.

Isomaltulose - chemical name α-D-Glucopyranosyl-(1→6)-D-fructofuranose, commercially available under the name Palatinose® - and trehalulose - chemical name α-D-Glucopyranosyl-(1→1)-D-fructose - are compounds that are as such known. Both are isomers of sucrose, occur in nature, and may be prepared on industrial scale via enzymatic isomerisation of sucrose in processes that are as such known. According to the invention, isomaltulose and/or trehalulose are used without having been further modified chemically, e.g. via oxidation or hydrogenation.

In one embodiment of the invention, Palatinose syrup is used as set retarder and/or plasticizer. Palatinose syrup is a product that is formed in an enzymatic process for the preparation of isomaltulose from sucrose. Palatinose syrup contains the following compounds:
i. between 1 wt.% and 25 wt.% fructose, preferably between 7 and 17 wt%;
ii. between 1 wt.% and 25 wt.% glucose, preferably between 5 and 15 wt.%;
iii. between 15 wt.% and 60 wt.% isomaltulose, preferably between 20 and 45 wt.%; and
iv. between 10 wt.% and 60 wt.% trehalulose, preferably between 15 wt.% and 40 wt.%,
wherein the sum of (i.), (ii), (iii) and (iv) is at least 60 wt.%, preferably at least 70 wt.%, and whereby the percentages are expressed as weight percentage of dry matter of the Palatinose syrup as a whole. Palatinose syrup is also known as Palatinose molasses; these two terms are herein considered to be synonyms. In practice, Palatinose syrup can contain sucrose too, in amounts up to about 15 wt.%. Nevertheless, the modifying behaviour Palatinose syrup was, despite the presence of sucrose, surprisingly found to be in line with that of isomaltulose and trehalulose. The set retarder and/or plasticizer is used in an amount lying between 0.01 and 0.5 wt.% (dry matter, based on amount of cement). It was found that in the range between 0.01 and 0.5 wt.% a good balance between effectiveness and cost can usually be found. Preferably, the set retarder and/or plasticizer is used in an amount of at least 0.02, 0.03 or even 0.05 wt.%; preferably, the set retarder and/or plasticizer is used in an amount of at most 0.4, 0.3, or even 0.25 wt.%. The actual incorporation / mixing-in of the set retarder and/or plasticizer may be done by means as such known for solid or liquid additives; one favourable method is to mix the set retarder and/or plasticizer with water, followed by the actual mixing of the water mixture with cement and possibly other compounds.

It was surprisingly found that the specific characteristics relating to set retardation and plasticizing of a concrete that contains isomaltulose and/or trehalulose as set retarder and/or plasticizer can remain essentially the same in case the set retarder and/or plasticizer according to the invention is combined with a traditional modifier such as sucrose. The invention thus further also relates to the use of isomaltulose and/or trehalulose as set retarder and/or plasticizer in concrete, whereby a further modifier such as sucrose or sodium gluconate is present. Preferably, the weight ratio between isomaltulose and/or trehalulose and the further modifier lies between 100:1 1 and 1:5, more preferably between 50:1 and 1:4, or between 10: 1 and 1:3, or between 5:1 and 1:2.

The invention will be illustrated by means of the following Examples and Comparative Experiments, without being limited thereto.

### Examples 1 - 12; Comparative Experiments A-J

Samples of concrete were prepared by mixing the ingredients as given in Tables 1 and 2. This was done by putting the water into a vessel, mixing the modifier (if any) thoroughly with the water, followed by mixing cement or a cement/sand mixture into the water/modifier mixture.

For the determination of the plasticizing effect, the cement/sand mixture was used; for the determination of the set retarding effect, cement paste without additional sand was used. The amounts of modifier are given in percentage dry substance.

**Table 1 - Compositions for Plasticizing tests**

| | A | B | C | D | E | 1 | 2 | 3 | 4 | 5 | 6 |
|---|---|---|---|---|---|---|---|---|---|---|---|
| Cement | 500 | 500 | 500 | 500 | 500 | 500 | 500 | 500 | 500 | 500 | 500 |
| Water | 250 | 250 | 250 | 250 | 250 | 250 | 250 | 250 | 250 | 250 | 250 |
| Sand ME 04-09 | 1000 | 1000 | 1000 | 1000 | 1000 | 1000 | 1000 | 1000 | 1000 | 1000 | 1000 |
| Sand ME 01-02 | 250 | 250 | 250 | 250 | 250 | 250 | 250 | 250 | 250 | 250 | 250 |
| Sodium gluconate | 0% | 0.05% | 0.2% | 0% | 0% | 0% | 0% | 0% | 0% | 0% | 0% |
| Sucrose | 0% | 0% | 0% | 0.05% | 0.2% | 0% | 0% | 0% | 0% | 0% | 0% |
| Isomaltulose | 0% | 0% | 0% | 0% | 0% | 0.05% | 0.2% | 0% | 0% | 0% | 0% |
| Trehalulose | 0% | 0% | 0% | 0% | 0% | 0% | 0% | 0.05% | 0.2% | 0% | 0% |
| Palatinose syrup | 0% | 0% | 0% | 0% | 0% | 0% | 0% | 0% | 0% | 0.05% | 0.2% |

| | | | | | | | | | | | |
|---|---|---|---|---|---|---|---|---|---|---|---|
| Legend to Table 1 Cement CEM I 42,5 R Milke® classic, supplied by HeidelbergerCement Sand supplied by Quarzwerke Österreich Sodium gluconate EMF1240, supplied by Jungbunzlauer Isomaltulose Palatinose®, supplied by Beneo-Palatinit Sucrose, Trehalulose supplied by the Südzucker Group Palatinose syrup Palatec M ™, supplied by Beneo-BBC | | | | | | | | | | | |

**Table 2 - Compositions for Set retarding tests**

| | F | G | H | I | J | 7 | 8 | 9 | 10 | 11 | 12 |
|---|---|---|---|---|---|---|---|---|---|---|---|
| Cement | 400 | 400 | 400 | 400 | 400 | 400 | 400 | 400 | 400 | 400 | 400 |
| Water | 120 | 120 | 120 | 120 | 120 | 120 | 120 | 120 | 120 | 120 | 120 |
| Sodium gluconate | 0% | 0.05% | 0.2% | 0% | 0% | 0% | 0% | 0% | 0% | 0% | 0% |
| Sucrose | 0% | 0% | 0% | 0.05% | 0.2% | 0% | 0% | 0% | 0% | 0% | 0% |
| Isomaltulose | 0% | 0% | 0% | 0% | 0% | 0.05% | 0.2% | 0% | 0% | 0% | 0% |
| Trehalulose | 0% | 0% | 0% | 0% | 0% | 0% | 0% | 0.05% | 0.2% | 0% | 0% |
| Palatinose syrup | 0% | 0% | 0% | 0% | 0% | 0% | 0% | 0% | 0% | 0.05% | 0.2% |

| | | | | | | | | | | | |
|---|---|---|---|---|---|---|---|---|---|---|---|
| Legend to Table 2 See at Table 1. | | | | | | | | | | | |

### Determination of plasticizing effect

The spreading of a cement sample under influence of its own weight was determined in a method based on EN18555-2. This was done by placing a funnel onto a plate, broadest side down, whereby the plate could be vibrated. The diameter of the funnel varied between 7 cm (top) and 10 cm (bottom). The overall height of the funnel was 6 cm. The freshly-mixed concrete was put into the funnel, such that the funnel was filled to the brim with concrete, while being compacted with a tamper. The funnel was then removed and the plate made to shake 15 times. After this, the diameter of the concrete sample was determined. The results are given in Table 3.

**Table 3**

| Comparative Experiment / Example | Sample Diameter (cm) |
|---|---|
| A | 15.5 |
| B | 18.5 |
| C | 20.5 |
| D | 16.0 |
| E | 16.5 |
| 1 | 17.0 |
| 2 | 18.0 |
| 3 | 17.5 |
| 4 | 20.0 |
| 5 | 16.5 |
| 6 | 20.0 |

The results in Table 3 clearly show that the plasticizing effect according to the invention differs significantly from that of sucrose (D, E), and more resembles that of sodium gluconate (B, C).

### Determination of set retarding effect

The measurement of the set retarding effect was done by a method based on EN196-3. The onset of setting was determined at a temperature of 30°C. This was done by mixing the modifier (if any) into 120g of water. Then, 400g of cement was mixed into the water/modifier mixture; this marked the start of the time-line. The concrete was mixed for one minute, left to rest for five minutes, then mixed again for 15 seconds. The concrete was then immediately placed into the vessel of an automated Vicat unit, and measurements at regular intervals were done. The initial stiffness of the samples was equal. Over time, as the hardening reactions proceeded, the penetration of the Vicat needle, which is as is well-known to the skilled person done with a standardized force, became smaller. The onset of setting of the concrete was in this test defined as the moment when the penetration of the Vicat-needle was reduced to 36 mm. The results are given in Table 4.

**Table 4**

| Comparative Experiment / Example | Set retarding (h) |
|---|---|
| F | 3.4 |
| G | 5.2 |
| H | 13.3 |
| I | 9.9 |
| J | 53.6 |
| 7 | 5.2 |
| 8 | 15.2 |
| 9 | 5.8 |
| 10 | 12.0 |
| 11 | 5.0 |
| 12 | 13.1 |

The results in Table 4 clearly show that the set retarding effect according to the invention differs significantly from that of sucrose (I, J), and more resembles that of sodium gluconate (G, H).

### Examples 13 - 16

Since Palatinose syrup can, and typically does, contain an amount of sucrose, it became the purpose of Examples 13 - 16 to investigate whether this could lead to a sucrose-like behaviour of the Palatinose syrup. Palatinose syrup samples having sucrose contents between 2 and 12 wt.% were selected. Tests regarding plasticizing and set retardation were performed. The tests were done as described above, the only difference being that the set retarding test was done at 20°C rather than at 30°C. The results are given in Table 5

**Table 5**

| Example | 13 | 14 | 15 | 16 |
|---|---|---|---|---|
| Sucrose content | 11.1 | 4.9 | 8.5 | 2.6 |
| Plasticizing effect (0.05% addition) (cm) | 16.0 | 16.0 | 17.0 | 16.5 |
| Plasticizing effect (0.2% addition) (cm) | 18.0 | 19.0 | 19.5 | 19.0 |
| Set retarding effect @ 20°C (0.05% addition) (h) | 5.2 | 5.2 | 5.0 | 5.0 |
| Set retarding effect @ 20°C (0.2% addition) (h) | 16.8 | 16.5 | 16.8 | 14.6 |

As is evident from the results of Table 5, the presence of some amount of sucrose in Palatinose syrup does not lead to a sucrose-like behaviour with respect to set retardation or plasticizing. Rather, and surprisingly, the behaviour stays fully in line with that of pure isomaltulose and trehalulose.

## Claims

1. Use of isomaltulose and/or trehalulose as set retarder and/or plasticizer in concrete, the isomaltulose and/or trehalulose not having been modified chemically, e.g. via oxidation or hydrogenation.

2. Use according to claim 1, whereby the set retarder and/or plasticizer is a syrup containing the following compounds:
i. between 1 wt.% and 25 wt.% fructose;
ii. between 1 wt.% and 25 wt.% glucose;
iii. between 15 wt.% and 60 wt.% isomaltulose; and
iv. between 10 wt.% and 60 wt.% trehalulose,
wherein the sum of (i), (ii), (iii) and (iv) is at least 60 wt.%, and whereby the percentages are expressed as weight percentage of dry matter of the syrup as a whole.

3. Use according to claim 1 or 2, wherein between 0.01 and 0.5 wt.%, relative to the amount of cement in the concrete, of isomaltulose and/or trehalulose or the syrup is used.

4. Use according to any one of claims 1 - 3, whereby a further set retarder or plasticizer is used, whereby the weight ratio between isomaltulose and/or trehalulose and the further set retarder or plasticizer lies between 100:1 and 1:5.

5. Use according to claim 4, wherein the further set retarder or plasticizer is sucrose and/or sodium gluconate.

6. Concrete, **characterised in that** the concrete contains between 0.01 and 0.5 wt.%, dry matter, based on the amount of cement in the concrete, isomaltulose and/or trehalulose, the isomaltulose and/or trehalulose not having been modified chemically, e.g. via oxidation or hydrogenation.

## Patentansprüche

1. Verwendung von Isomaltulose und/oder Trehalulose als Abbindeverzögerer und/oder Plastifizierungsmittel in Beton, wobei die Isomaltulose und/oder Trehalulose nicht chemisch, z. B. mittels Oxidation oder Hydrierung, modifiziert worden sind.

2. Verwendung nach Anspruch 1, wobei der Abbindeverzögerer und/oder das Plastifizierungsmittel ein Sirup ist, der die folgenden Verbindungen enthält:
i. zwischen 1 Gew.% und 25 Gew.% Fructose;
ii. zwischen 1 Gew.% und 25 Gew.% Glucose;
iii. zwischen 15 Gew.% und 60 Gew.% Isomaltulose und
iv. zwischen 10 Gew.% und 60 Gew.% Trehalulose,
wobei die Summe von (i), (ii), (iii) und (iv) mindestens 60 Gew.% beträgt, und wobei die Prozentsätze als Gewichtsprozent der Trockenmasse des Sirups als Ganzes angegeben sind.

3. Verwendung nach Anspruch 1 oder 2, wobei zwischen 0,01 und 0,5 Gew.%, bezogen auf die Menge an Zement in dem Beton, von Isomaltulose und/oder Trehalulose oder von dem Sirup verwendet werden.

4. Verwendung nach einem der Ansprüche 1 bis 3, wobei ein weiterer Abbindeverzögerer oder ein weiteres Plastifizierungsmittel verwendet wird, wobei das Gewichtsverhältnis zwischen Isomaltulose und/oder Trehalulose und dem weiteren Abbindeverzögerer oder dem weiteren Plastifizierungsmittel zwischen 100:1 und 1:5 liegt.

5. Verwendung nach Anspruch 4, wobei der weitere Abbindeverzögerer oder das weitere Plastifizierungsmittel Saccharose und/oder Natriumgluconat ist.

6. Beton, **dadurch gekennzeichnet, dass** der Beton zwischen 0,01 und 0,5 Gew.% der Trockenmasse, bezogen auf die Menge an Zement in dem Beton, von Isomaltulose und/oder Trehalulose enthält, wobei die Isomaltulose und/oder Trehalulose nicht chemisch, z. B. mittels Oxidation oder Hydrierung, modifiziert worden sind.

## Revendications

1. Utilisation d'isomaltulose et/ou de tréhalulose comme retardateur de prise et/ou plastifiant dans du béton, l'isomaltulose et/ou le tréhalulose n'ayant pas été modifiés chimiquement, par exemple par oxydation ou hydrogénation.

2. Utilisation selon la revendication 1, dans laquelle le retardateur de prise et/ou le plastifiant est un sirop contenant les composés suivants :
i. entre 1 % en poids et 25 % en poids de fructose ;
ii. entre 1 % en poids et 25 % en poids de glucose ;
iii. entre 15 % en poids et 60 % en poids d'isomaltulose ; et
iv. entre 10 % en poids et 60 % en poids de tréhalulose,
la somme de (i), (ii), (iii) et (iv) étant d'au moins 60 % en poids, et les pourcentages étant exprimés en pourcentage pondéral de la matière sèche de l'ensemble du sirop.

3. Utilisation selon la revendication 1 ou 2, dans laquelle on utilise entre 0,01 et 0,5 % en poids, relativement à la quantité de ciment dans le béton, d'isomaltulose et/ou de tréhalulose ou du sirop.

4. Utilisation selon l'une quelconque des revendications 1 à 3, dans laquelle on utilise un retardateur de prise ou un plastifiant supplémentaire, dans laquelle le rapport pondéral entre l'isomaltulose et/ou le tréhalulose et le retardateur de prise ou le plastifiant supplémentaire est de 100:1 à 1:5.

5. Utilisation selon la revendication 4, dans laquelle le retardateur de prise ou le plastifiant supplémentaire est du saccharose et/ou du gluconate de sodium.

6. Béton, **caractérisé en ce que** le béton contient entre 0,01 et 0,5 % en poids de matière sèche, relativement à la quantité de ciment dans le béton, d'isomaltulose et/ou de tréhalulose, l'isomaltulose et/ou le tréhalulose n'ayant pas été modifiés chimiquement, par exemple par oxydation ou hydrogénation.
